(19) Europäisches Patentamt

European Patent Office

Office européen des brevets

(11) Numéro de publication : **0 186 556**
**B1**

(12) **FASCICULE DE BREVET EUROPÉEN**

(45) Date de publication du fascicule du brevet :
17.05.89

(21) Numéro de dépôt : 85402350.4

(22) Date de dépôt : 29.11.85

(51) Int. Cl.⁴ : **H 02 B   1/20, H 02 B   1/08**

(54) Système et colonne de distribution pour appareils électriques interrupteurs.

(30) Priorité : 20.12.84 FR 8419536

(43) Date de publication de la demande :
02.07.86 Bulletin 86/27

(45) Mention de la délivrance du brevet :
17.05.89 Bulletin 89/20

(84) Etats contractants désignés :
**AT BE CH DE FR GB IT LI NL**

(56) Documents cités :
**FR–A– 2 126 115
US–A– 3 321 672
US–A– 3 626 253**

(73) Titulaire : **LA TELEMECANIQUE ELECTRIQUE
33 bis, avenue du Maréchal Joffre
F-92000 Nanterre (FR)**

(72) Inventeur : **Jego, Gérard
12, rue Louis Pasteur
F-21470 Brazey en Plaine (FR)**
Inventeur : **Thierry, Jean Pierre
36, rue des espaces verts
F-21560 Couternon (FR)**
Inventeur : **Verdenne, Serge
7, rue du Potet
F-21120 Marcilly Sur Tille (FR)**

(74) Mandataire : **Marquer, Francis et al
35, Avenue Victor Hugo
F-78960 Voisins le Bretonneux (FR)**

## Description

La présente invention concerne un système de distribution pour appareils électriques interrupteurs, ce système comportant une colonne de distribution comprenant des barres omnibus verticales non coplanaires et axées dans différents plans parallèles verticaux et une enveloppe de protection disposée autour des barres. Elle concerne également la colonne de distribution appropriée à un tel système.

Par appareils électriques interrupteurs, on désigne présentement des appareils tels que des contacteurs, disjoncteurs, contacteurs-disjoncteurs, appareils de protection, ou interrupteurs proprement dits comprenant plusieurs pôles pour effectuer l'ouverture et/ou la fermeture d'un circuit de puissance alimenté à partir des barres omnibus de distribution précitées.

Il est souhaitable d'associer à des colonnes de distribution électrique à barres situées dans différents plans parallèles verticaux des systèmes de fixation et de raccordement d'appareils électriques interrupteurs qui permettent un montage peu encombrant en profondeur et commode de tels appareils tout en offrant la possibilité de sectionner et de réarmer en toute sécurité la liaison électrique entre les barres omnibus de distribution et les appareils.

L'état de la technique est illustré par les brevets US-A-3 321 672, US-A-3 626 253 et FR-A-2 126 115.

La présente invention a en particulier pour but de permettre une fixation peu encombrante et un raccordement électrique sectionnable d'appareils interrupteurs sur une colonne de distribution à barres omnibus non coplanaires.

Elle vise également à réaliser un système simple et particulièrement accessible dans lequel la commande du sectionnement et du réarmement peut être bloquée par une détection mécanique de l'état « marche » de l'appareil interrupteur.

Selon l'invention, dans un système du type précité, il est prévu une pluralité de supports qui s'étendent dans une direction parallèle aux plans des barres, chaque support comportant au moins une paroi d'appui applicable sur une face respective de fixation de l'enveloppe de protection de la colonne et étant agencé pour porter, d'une part, au moins un appareil interrupteur, d'autre part, un organe de prise de courant et de sectionnement muni de pinces embrochables sur les barres de distribution par introduction dans des trappes prévues dans un flanc de l'enveloppe perpendiculaire aux plans des barres, l'organe de prise de courant et de sectionnement comportant des moyens de connexion aux appareils interrupteurs et une partie mobile de sectionnement susceptible d'être actionnée par des moyens de commande manuelle.

L'agencement décrit et notamment la disposition de l'organe de sectionnement débrochable entre le flanc de l'enveloppe de protection du jeu de barres et l'appareil interrupteur en association avec un support commun audit organe et à l'appareil, permettent de constituer un système à extension latérale ; ce système est donc peu encombrant en profondeur et il autorise un montage et un câblage faciles, ainsi qu'une bonne accessibilité des appareils et de leurs blocs de sectionnement associés.

L'invention concerne également une colonne de distribution pour appareils interrupteurs disposés sur des supports d'un système de distribution, comprenant des barres omnibus verticales non coplanaires axées dans différents plans parallèles verticaux, une enveloppe de protection disposée autour des barres et au moins un flanc perpendiculaire aux plans des barres et muni de trappes de passage pour des pinces d'embrochement d'un organe de prise de courant et de sectionnement associé à chaque support, caractérisée par au moins une aile de fixation perpendiculaire au flanc et dotée, à intervalles réguliers, d'orifices de passage pour des tenons et pièces de verrouillage solidaires des supports des appareils interrupteurs.

Dans un mode d'exécution préféré, le support comprend une partie fixe par rapport à l'enveloppe de la colonne et une partie réglable en profondeur par rapport à la partie fixe, la partie fixe du support comprenant un voile vertical et au moins une face horizontale dotée de moyens de réglage de la partie réglable, la partie réglable comportant une platine de fixation des appareils interrupteurs.

Selon une forme d'exécution avantageuse, le bloc de prise de courant et de sectionnement présente un plaston de sectionnement muni d'un orifice frontal à fentes et muni d'une noix rotative qui comporte un logement à fentes coaxial à l'orifice et qui est en rotation de l'arbre rotatif, les fentes de l'orifice du plastron et du logement de la noix étant susceptibles de recevoir une clé de manœuvre et coïncidant seulement dans une position d'embrochement et dans une position de sectionnement.

De préférence, le bloc de prise de courant et de sectionnement comprend un palpeur présentant une prise manuelle, une butée et une extrémité libre disposée en profondeur au niveau de la manette de commande de l'appareil, la butée du palpeur coopérant avec une portée de la partie mobile du bloc de sectionnement pour empêcher le sectionnement et le réembrochement lorsque le palpeur détecte que la manette de l'appareil est en position « marche ».

Il peut en outre être prévu un dispositif de précoupure qui coopère avec une partie mobile du bloc de prise de courant et de sectionnement pour actionner au moins un contact de précoupure associé à l'appareil interrupteur.

Un mode de réalisation de l'invention sera décrit ci-après à titre d'exemple non limitatif avec référence aux dessins annexés dans lesquels :

La figure 1 représente en élévation de face un système de distribution électrique conforme à l'invention ;

La figure 2 représente en perspective un support d'appareil interrupteur fixé à l'enveloppe de la colonne de distribution ;

La figure 3 montre en perspective à plus petite échelle la partie fixe du support de la figure 2, ainsi qu'une variante de réalisation de la partie réglable du support rapportée à sa partie fixe ;

La figure 4 est une vue de dessus partielle à plus grande échelle du support de la figure 2 ;

La figure 5 représente en élévation de face une liaison à pignon et crémaillère entre l'arbre rotatif de commande du sectionnement et la partie mobile en translation de l'organe de prise de courant et de sectionnement ;

La figure 6 est une vue en élévation du même support de la figure 2 ;

La figure 7 représente en perspective éclatée une variante de réalisation du support ;

La figure 8 montre en élévation les supports cloisonnés du type indiqué figure 7, le cloisonnement étant ôté du support inférieur pour permettre de voir le plastron de sectionnement ;

La figure 9 est une vue de dessus à plus grande échelle du support de la figure 7 ;

La figure 10 montre une vue de dessus partielle d'une variante de réalisation de la colonne et du bloc de sectionnement.

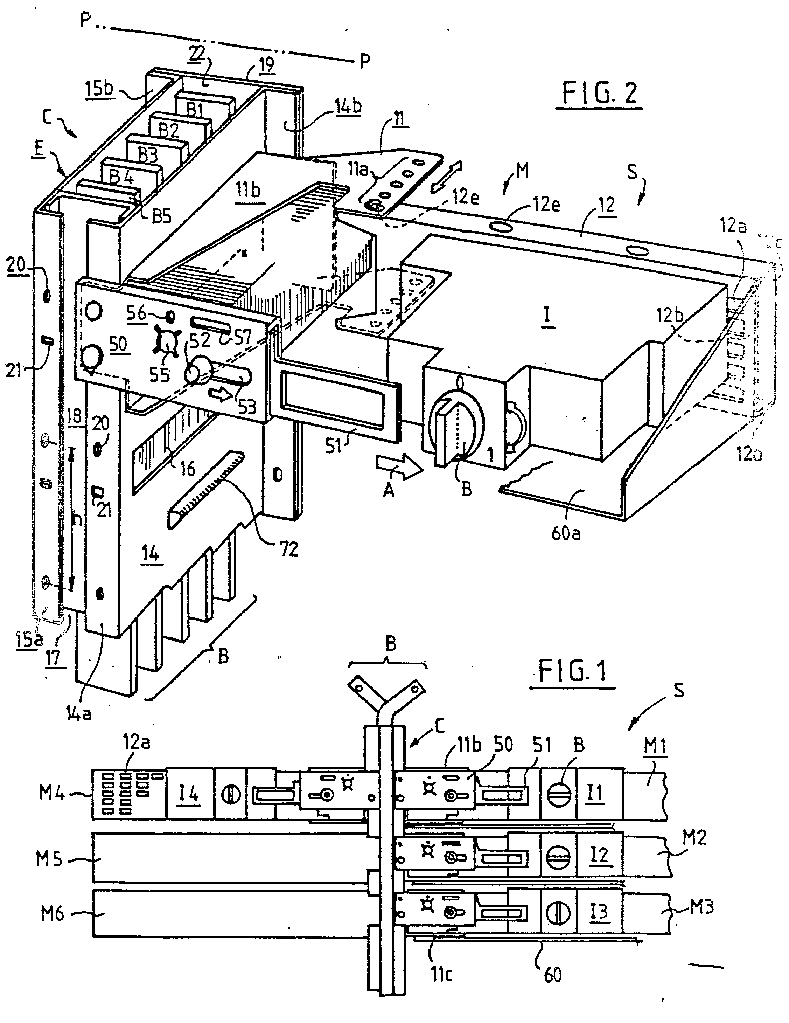

Le système S illustré par la figure 1 est associé à une colonne de distribution C comprenant des barres omnibus B1 à B5 non coplanaires, parallèles à un même plan P dans une enveloppe de protection E.

Le système représenté est conçu pour la fixation et le raccordement électrique d'appareils interrupteurs I, par exemple des contacteurs, disjoncteurs, contacteurs-disjoncteurs ou interrupteurs proprement dits, auxquels sont éventuellement associés des dispositifs annexes non représentés tels que des auxiliaires de protection, des fusibles, des auxiliaires de télécommande. Le système S se compose de supports formant des modules M ; la figure 1 montre plusieurs supports M1-M6 disposés bilatéralement par rapport à la colonne sur les flancs opposés de celle-ci.

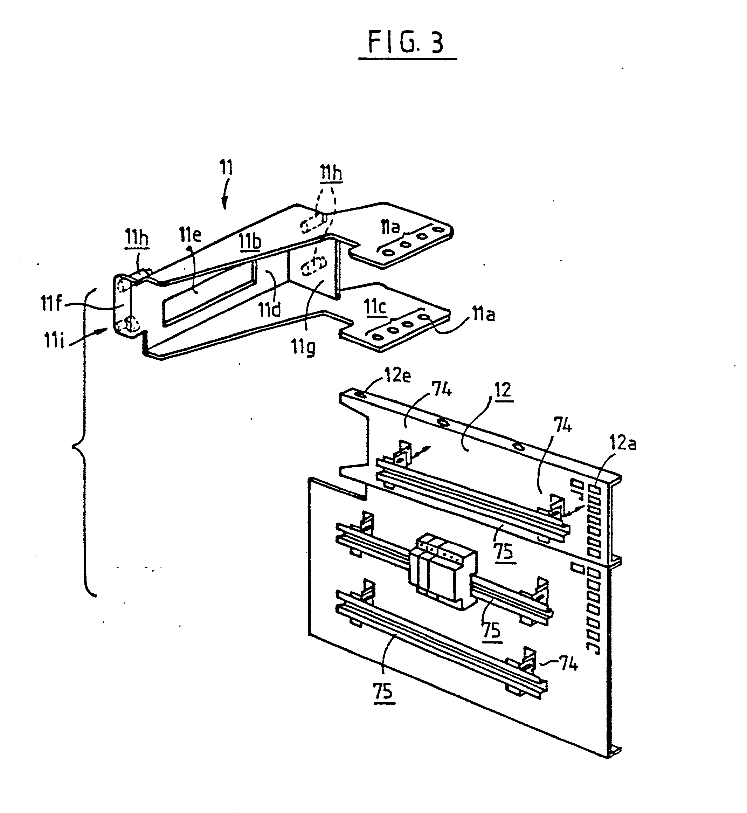

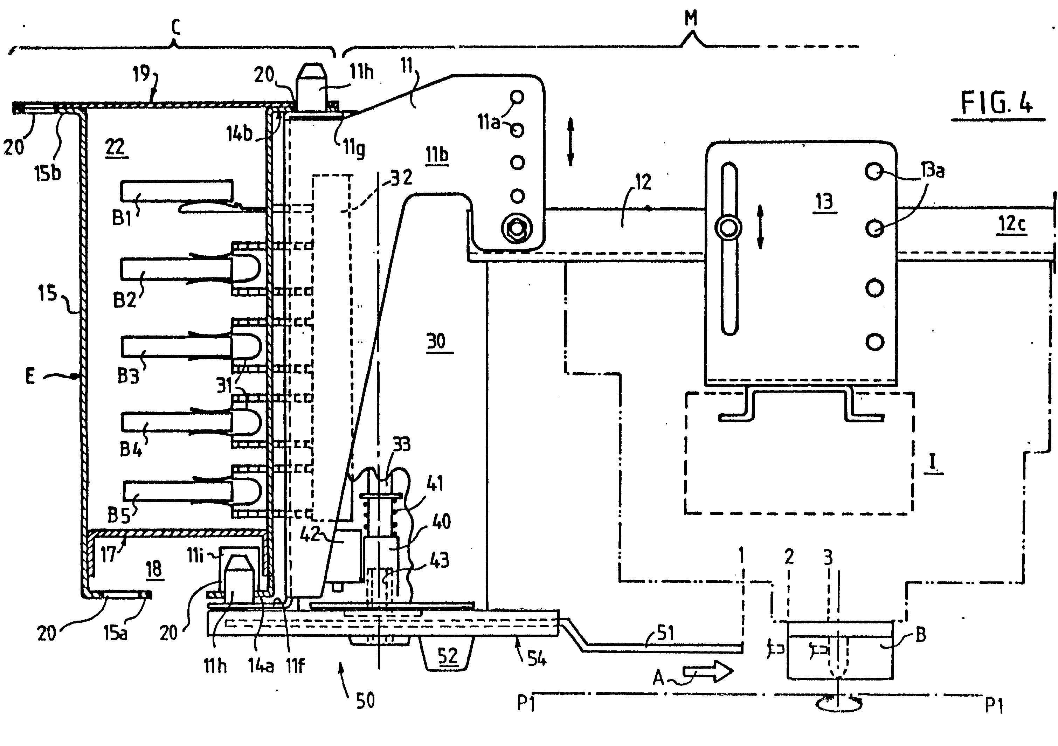

Chaque support ou module M est de forme générale allongée et comporte une partie fixe 11 et une platine 12 réglable en profondeur, c'est-à-dire perpendiculairement aux plans des barres, par rapport à la partie fixe (figures 2, 3 et 4) ; il comporte aussi le cas échéant au moins une équerre 13 augmentant la latitude de réglage en profondeur, cette équerre étant fixée à la platine 12 (figure 4) ; la platine 12 permet de conserver, avec des appareils de profondeurs différentes, un gabarit de logement situé à l'arrière d'un plan P1-P1 (figure 4) correspondant par exemple à une porte d'armoire logeant le système de distribution décrit. Les équerres 13 peuvent par exemple supporter des rails verticaux ou horizontaux portant eux-mêmes des appareils modulaires interrupteurs et leurs annexes (figure 3).

La platine 12 est de préférence un profilé ou châssis muni de perforations normalisées 12a dans une âme 12b bordée d'ailes 12c, 12d ; il est prévu sur ses ailes 12c, 12d des trous de fixation 12e permettant le passage de vis qui passent également dans des orifices de réglage, par exemple sous forme de boutonnière 11a, ménagés sur une paroi horizontale supérieure 11b du support fixe 11.

Dans la forme d'exécution de la figure 4, l'équerre 13 présente des orifices 13a correspondant à des orifices 12e de la platine afin de produire une fixation réglable en profondeur de l'équerre 13 au moyen de vis engagées dans lesdits orifices, ceci permettant de rapporter sur le support des appareils interrupteurs modulaires de moins grande profondeur que les appareils I.

Dans la forme d'exécution de la figure 3, la platine 12 a une surface développée verticalement pour porter au moyen de pattes télescopiques 74 rapportées frontalement plusieurs rails horizontaux 75 de support d'appareils modulaires.

Le support fixe 11, mieux visible sur la figure 3, présente une paroi horizontale supérieure 11b et une paroi horizontale inférieure 11c comportant les boutonnières précitées de réglage 11a pour la platine 12. Les parois 11b, 11c sont réunies par un voile vertical 11d doté d'une ouverture 11e destinée à être placée en regard d'une trappe ménagée dans un flanc de la colonne pour permettre le passage de lames ou de pinces d'embrochement sur les barres B1-B5.

Le support fixe 11 comprend une paroi antérieure 11f et une paroi postérieure 11g de fixation à l'enveloppe E de la colonne C. Les parois 11f, 11g sont verticales et se rattachent en équerre au voile vertical 11d ; la paroi 11f est équipée d'un tenon 11h et d'une pièce de verrouillage 11i de type quelconque, par exemple quart de tour. La paroi 11g est munie de deux tenons 11h ; les tenons 11h ont des extrémités tronconiques pour être convenablement guidés dans des logements de l'enveloppe E.

L'enveloppe de protection E de la colonne C renferme les barres omnibus B1-B5. Elle comprend (figures 2 et 3) deux flancs verticaux opposés 19, 15 perpendiculaires au plan P-P et munis chacun de trappes 16 pour le passage des pinces d'embrochage propres à chaque support M. A chacun des flancs verticaux 14, 15 se rattachent une aile avant pliée 14a, 15a et une aile arrière pliée 14b, 15b. Un profilé 17 en U est fixé à l'intérieur de l'enveloppe E sur les faces internes des parois verticales 14, 15, de manière à ménager en retrait des ailes 14a, 15a une chambre 18, tandis qu'un plat 19 est fixé à l'arrière des ailes 14b, 15b pour fermer la chambre 22 des barres B1-B5. Les ailes 14a, 14b, 15a, 15b sont parallèles au plan P-P et sont dotées, à intervalles réguliers h correspondant au pas de fixation des supports modulaires, d'orifices 20 de passage pour les tenons 11h et d'orifices 21 de passage pour les pièces de verrouillage 11i. On comprend que les supports M sont engagés horizontalement sur la colonne de manière frontale, c'est-à-dire selon une direction perpendiculaire au plan P-P et aux plans des barres omnibus B1-B5, de façon que les tenons 11h et les pièces de verrouillage 11i

pénètrent dans les orifices respectifs 20, 21 des ailes 14a, 14b, 15a, 15b. Les flancs 14, 15 de l'enveloppe E peuvent avantageusement présenter des saillies 72 par exemple obtenues par crevé pour servir d'appui au support 11 et faciliter la mise en place de celui-ci. Les barres B sont au nombre de cinq mais peuvent, bien entendu, être en nombre inférieur. Les barres B1 à B5 correspondent aux conducteurs d'un réseau électrique triphasé avec neutre distribué et conducteur de protection. Dans un autre mode de construction, le conducteur de protection peut être constitué par l'enveloppe E elle-même lorsque celle-ci est en matériau électriquement conducteur, ou par un conducteur de protection rapporté à l'enveloppe lorsque celle-ci est en matériau isolant. Cette dernière réalisation sera décrite plus loin en regard de la figure 10.

L'organe de prise de courant et de sectionnement est un bloc 30 rapporté dans le support fixe 11 à l'aide de moyens de fixation, mais il pourrait bien entendu constituer lui-même ce support fixe et/ou se composer d'un organe de prise de courant et d'un organe de sectionnement. Le voile vertical 11d du support fixe 11 peut être fixé au flanc 14 de l'enveloppe E.

Le bloc 30 est moulé en matière isolante et présente des pinces 31 de prise de courant embrochables sur les barres omnibus B1-B5 et débrochables de celles-ci par translation d'un coulisseau à simple sectionnement 32 commandé par un arbre rotatif 33 ; les pinces 31 sont logées individuellement dans des compartiments ménagés dans le coulisseau 32.

Le bloc 30 présente, d'autre part, des moyens fixes de connexion par exemple à vis avec des bornes de puissance de l'appareil interrupteur I. La commande du mouvement de translation du coulisseau s'effectue en réponse à la rotation de l'arbre 33 grâce à au moins une liaison de transformation de mouvement, par exemple du type à pignon et crémaillère.

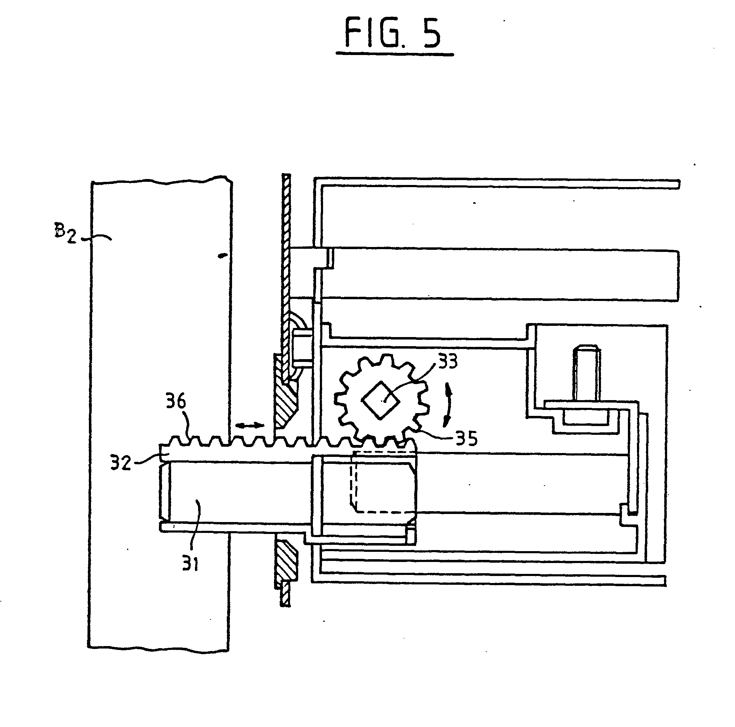

La figure 5 représente ce type de liaison avec le pignon 35 monté sur l'arbre rotatif 33 et engrenant avec la crémaillère 36 réalisée sur la face supérieure du coulisseau 32, de manière à transformer le mouvement de rotation de l'arbre en un mouvement de translation du coulisseau ; sur la figure 5, la pince 31 est illustrée en position embrochée sur la barre omnibus B2 par exemple.

On peut évidemment utiliser pour réaliser l'organe de prise de courant sectionnable tout autre organe approprié, par exemple à pivotement des pinces d'embrochage.

La rotation de l'arbre 33 est produite au moyen d'une clé non représentée dont l'empreinte peut pénétrer dans un logement approprié 43 d'une noix 40 fixée à l'arbre (figure 4). Cette noix 40 peut être guidée axialement sur l'arbre 33 et être sollicitée vers un plastron 50 de sectionnement par un ressort 41, de manière à être susceptible d'une légère course axiale vers l'arrière par rapport à l'arbre 33 lors de l'introduction de la clé de commande du sectionnement afin d'actionner un contact 42 de précoupure associé à l'appareil

interrupteur I de façon à assurer que le sectionnement s'effectuera à vide.

Il va de soi que l'on peut également prévoir à titre de moyen de commande du sectionnement une manette ou un volant disposé à demeure, mais susceptible d'être inhibé par le plastron et de commander directement au début du mouvement de sectionnement un dispositif de précoupure.

Le plastron 50 de sectionnement est fixé par exemple par encliquetage en face avant du bloc de sectionnement 30 ou du support fixe 11.

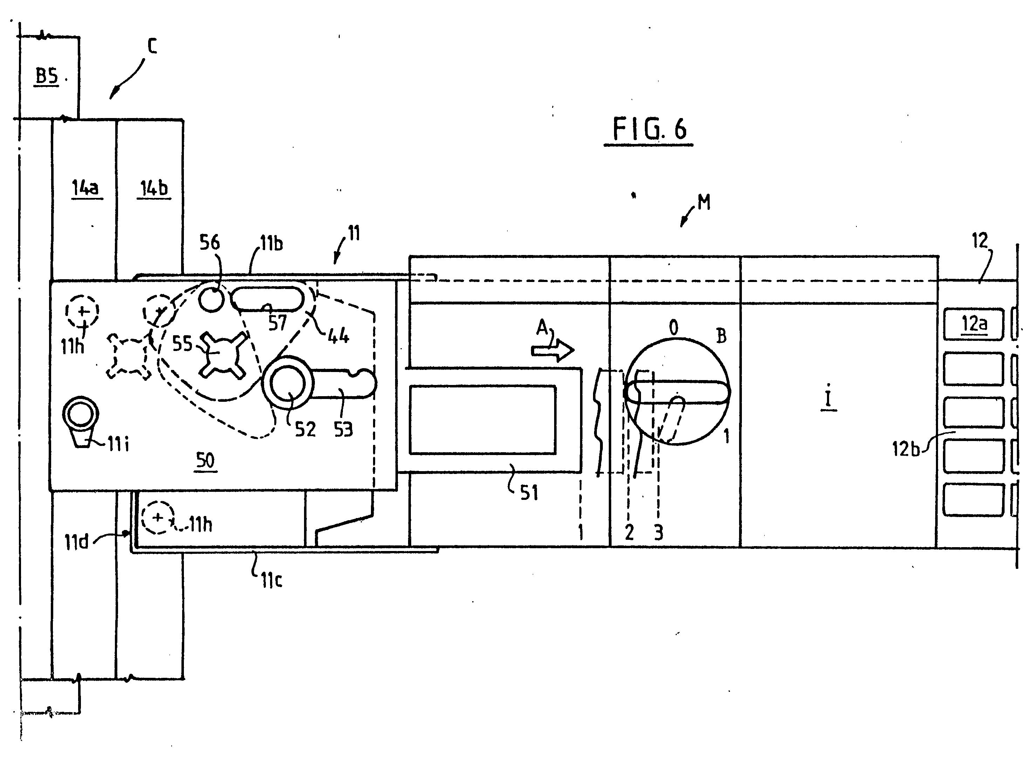

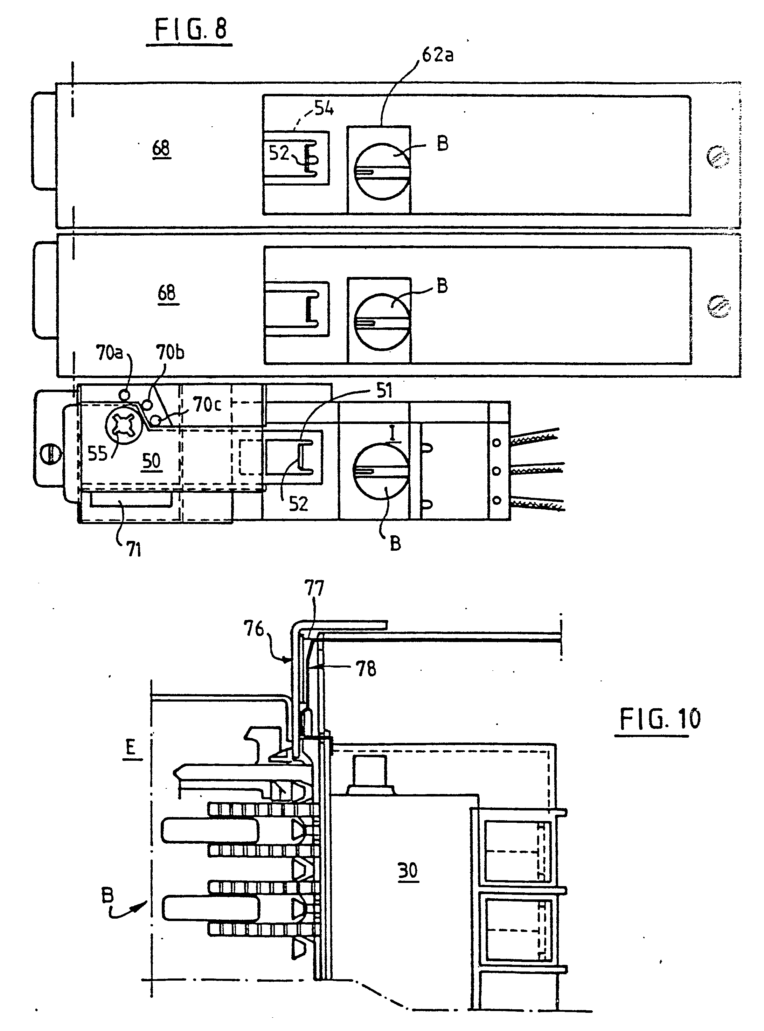

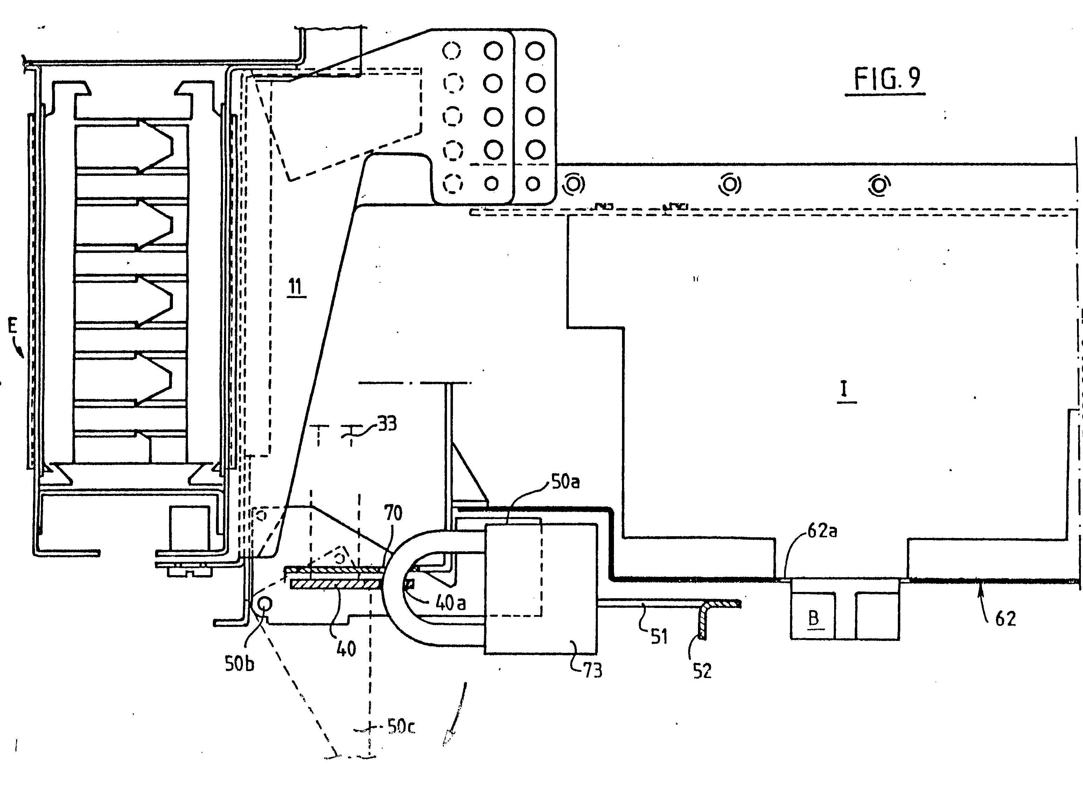

Ce plastron 50 comporte (figure 4) un palpeur 51 déplaçable manuellement parallèlement au plan P1-P1 selon une flèche A à l'encontre de l'effort d'un ressort de rappel non indiqué. Le palpeur est logé et guidé dans le plastron, en étant muni d'un organe de déplacement manuel. Cet organe est par exemple un bouton 52 de manœuvre traversant une fenêtre oblongue 53 du plastron (figures 2 et 6) ou une prise 52 constituée par un repli du palpeur (figures 8 et 9). L'extrémité libre du palpeur peut ainsi être amenée de la position de repos 1 à la position de détection 2 « marche » ou « fermeture » ou à la position de détection 3 « coupure », « déclenchement » ou « ouverture » de la position prise par le bouton B de l'appareil interrupteur I. Le palpeur 51 présente de plus une butée non indiquée coopérant avec une portée, par exemple une came 44 de la noix 40 pour empêcher le sectionnement et le réembrochage quand le palpeur ne peut venir qu'en position 2.

Une détection rotative peut bien entendu être également réalisée. Des palpeurs 51 de formes différentes peuvent être prévus en association avec des appareils interrupteurs de dimensions différentes et/ou des appareils interrupteurs équipés de boutons ou de manettes agencés différemment.

La face frontale du plastron présente d'autre part un orifice à fentes 55 pour l'introduction de la clé de commande du sectionnement et du réarmement, une fenêtre d'indication 56 en regard de laquelle vient une indication « 0 » ou « 1 » portée par une face solidaire en rotation de l'arbre 33, par exemple la face avant de la noix 40, et une fenêtre oblongue 57 susceptible de coïncider avec une fenêtre correspondante 58 de la noix pour autoriser un cadenassage ou verrouillage de l'arbre 33 dans sa position de sectionnement.

La noix 40 a été illustrée sur la figure 6 en traits pleins dans sa position de sectionnement et en traits mixtes dans sa position de réarmement. La forme de la clé et de l'orifice 55 assure que la clé ne peut être engagée et retirée que dans les deux positions « sectionné » et « réarmé » par rotation quart de tour pour passer de l'une à l'autre en interdisant notamment le retrait de la clé dans sa position intermédiaire. Le câblage de puissance en aval de l'appareil interrupteur et son câblage éventuel de commande peuvent aisément être collectés latéralement aux supports modulaires M. Le système représenté peut être installé de manière autonome ou dans une armoire de distribution. Dans une première forme d'exécution, des cloisons isolantes horizontales 60a sont prévues entre les différents supports M (figures 1 et 2).

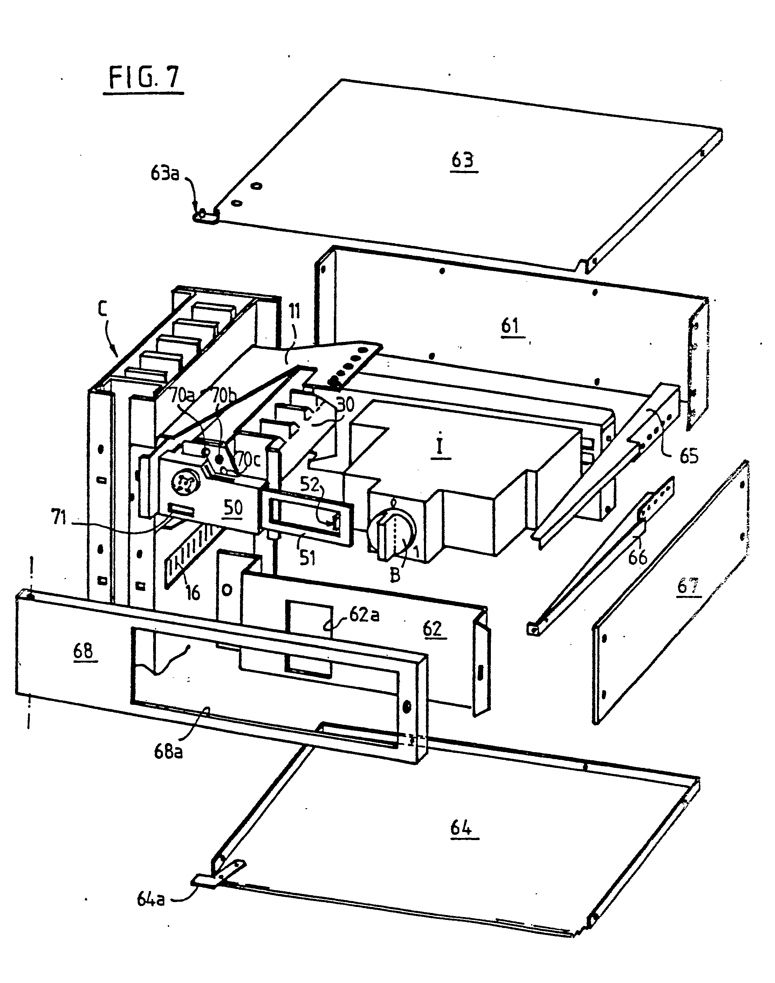

Dans une deuxième forme d'exécution (figure 7), chaque support M est logé dans un coffret 60 comprenant une paroi de fond 61, une paroi avant 62, une paroi supérieure 63 et une paroi inférieure 64, ainsi que du côté opposé à la partie fixe 11 du support deux entretoises 65, 66 et une paroi latérale 67. La rigidité des parois 62, 67 du coffret combinée à celle du support M procure la résistance mécanique souhaitée de l'ensemble. Les parois 63 et 64 présentent des charnières 63a, 64a pour une porte pivotante 68.

La paroi avant 62 forme un plastron d'appareil pour les appareils interrupteurs et comporte au moins une fenêtre 62a pour laisser apparent le bouton B de chaque appareil, tout en étant conformée et montée de manière à laisser accessible le plastron de sectionnement 50 et le palpeur 51 (figures 7 et 8). La porte 68 présente une ouverture 68a permettant l'accès au bouton B et à la prise 52 de manœuvre du palpeur 51. Le palpeur est, par ailleurs, muni d'un orifice autorisant le cadenassage du palpeur dans la position 3 d'ouverture de l'appareil interrupteur ; on constate que l'opérateur peut ainsi effectuer un test du bouton B et un verrouillage à l'état ouvert de l'appareil sans avoir à ouvrir la porte 68, le bloc de sectionnement pouvant rester embroché.

Certaines parois du coffret, par exemple la paroi inférieure 64, peuvent jouer le rôle de cloisonnement en armoire.

Il est de plus prévu dans le plastron de sectionnement 50 trois orifices 70a, 70b, 70c coïncidant dans la position de sectionnement du bloc 30 avec trois orifices correspondants de la noix 40 ou du coulisseau pour permettre un verrouillage du type « 3 cadenas » du bloc.

On voit à la partie inférieure du plastron de sectionnement 50 indiqué en bas de la figure 8, une fenêtre 71 permettant à l'opérateur de constater la coupure effective à l'aide de moyens indicateurs liés à la partie mobile du bloc 30 et apparaissant dans cette fenêtre en position de sectionnement.

Sur la figure 9, un cadenas 73 a été représenté en prise dans un orifice 40a de la noix 40 et dans un orifice correspondant 70 du plastron de sectionnement 50. Le plastron 50 présente à sa partie arrière une facette 50a qui masque une vis non représentée de fixation du plastron d'appareil 62 au support. Le plastron 50 est escamotable, par exemple par pivotement autour d'un axe 50b, pour dégager la vis de fixation. On comprend que l'intervention sur l'appareil interrupteur I ou le démontage de celui-ci n'est donc autorisé qu'après le pivotement du plastron de sectionnement 50 pour effectuer le démontage du plastron d'appareil 62. De plus, le pivotement du plastron 50 pour venir dans la position ouverte 50c n'est possible que dans la position de sectionnement de la partie mobile du bloc 30 ; il est prévu à cet effet des conformations coopérantes sur le plastron et la partie mobile, par exemple la noix 40, du bloc 30 pour interdire l'ouverture du plastron 50 en position embrochée.

L'enveloppe E de la colonne de distribution illustrée par la figure 10 loge plusieurs barres B et présente, sur sa partie extérieure arrière, une cornière 76 rapportée. Sur cette cornière est fixé du côté du bloc de sectionnement 30 un conducteur plat 77 de protection ; ce conducteur 77 est disposé de manière optionnelle et il est mis en contact dans la position d'embrochement du bloc 30 avec une pièce élastique conductrice 78 prévue sur le bloc.

Le système de distribution décrit fonctionne de la manière suivante :

La colonne de distribution C étant montée à l'air libre ou dans une enveloppe, par exemple dans une armoire, l'opérateur qui souhaite disposer sur la colonne un support modulaire latéral M rapporte ce support horizontalement pour engager les tenons 11h et pièces de verrouillage 11i dans les orifices respectifs 20, 21 des ailes frontales 14a, 15a et postérieures 14b, 15b de l'enveloppe E, tandis que le support est maintenu en appui sur les saillies 72 puis il fixe le support par verrouillage de la pièce quart de tour 11i.

Pour effectuer une manœuvre de sectionnement, l'opérateur saisit le bouton ou la prise 52 et déplace le palpeur 51 dans le sens de la flèche A (figures 2 et 4) jusqu'à la butée de l'extrémité du palpeur contre le bouton B de l'appareil interrupteur I.

Si le palpeur détecte la position 3, c'est-à-dire « ouverture » ou « arrêt », de l'appareil (figure 2), l'opérateur peut introduire la clé de commande du sectionnement dans l'orifice à fentes 55 et dans le logement coaxial correspondant 43 de la noix 40, les fentes respectives de l'orifice et du logement étant alignées. Par la rotation de la clé, l'opérateur produit alors le pivotement de l'arbre et le déplacement du coulisseau 32. Le microcontact 42 de précoupure est actionné par le déplacement vers l'arrière de la noix 40 contre le ressort de rappel 41 lorsque l'opérateur introduit la clé. L'opérateur peut alors actionner sans risque l'appareil interrupteur et vérifier des auxiliaires de celui-ci.

Si le palpeur détecte la position 2, c'est-à-dire « fermeture » ou « marche », de l'appareil, son déplacement insuffisant ne permet pas au logement 43 de venir en regard de l'orifice 55, de sorte que la clé de commande de sectionnement ne peut être introduite.

Lorsqu'après sectionnement l'opérateur veut réembrocher le coulisseau 32, il ne peut pas effectuer cette manœuvre si l'appareil interrupteur I est en position « marche », puisque là encore la course insuffisante du palpeur interdit l'introduction de la clé.

Il convient de noter que le système décrit offre une sécurité lors des opérations de montage et de démontage des supports 11 sur la colonne C. Du fait que la direction d'engagement/dégagement des supports 11 est perpendiculaire à la direction d'embrochage/débrochage du bloc de sectionnement 30, il est impossible, quand la partie mobile du bloc 30 est en position sortie, d'engager le support 11 sur la colonne ou, quand le support est monté sur la colonne, de le dégager de celle-ci.

## Revendications

1. Système de distribution pour appareils électriques interrupteurs (I), comportant une colonne de distribution (C) qui comprend des barres omnibus (B1-B5) verticales non coplanaires et axées dans différents plans parallèles verticaux, et une enveloppe de protection (E) disposée autour des barres, caractérisé par :

une pluralité de supports (M) qui s'étendent dans une direction parallèle au plan desdites barres (B1-B5), chaque support comportant au moins une paroi d'appui (11f, 11 g) applicable sur une face respective de fixation (14a, 14b, 15a, 15b) de l'enveloppe de protection (E) de la colonne (C) et étant agencé pour porter :

d'une part, au moins un appareil interrupteur (I),

d'autre part, un organe de prise de courant et de sectionnement (30) muni de pinces (31) embrochables sur les barres de distribution (B) par introduction dans des trappes (16) prévues dans un flanc (14, 15) de l'enveloppe perpendiculaire aux plans des barres,

l'organe de prise de courant et de sectionnement (30) comportant des moyens de connexion aux appareils interrupteurs et une partie mobile de sectionnement (32) susceptible d'être actionnée par des moyens de commande manuelle.

2. Système selon la revendication 1, caractérisé par le fait que les faces de fixation (14a, 14b, 15a, 15b) prévues sur l'enveloppe (E) pour recevoir les parois d'appui (11f, 11g) des supports (M) sont perpendiculaires aux flancs (14, 15) de l'enveloppe dans lesquels sont ménagées les trappes (16) de passage des pinces embrochables (31).

3. Système selon la revendication 2, caractérisé par le fait que les trappes d'embrochage (16) sont prévues sur deux flancs opposés (14, 15) de l'enveloppe (E) de la colonne de distribution (C), des saillies d'appui (72) étant également prévues pour les supports (11) sur les flancs (14, 15).

4. Système selon la revendication 2 ou 3, caractérisé par le fait que l'enveloppe (E) de la colonne de distribution (C) présente au moins une aile de fixation (14a, 14b, 15a, 15b) perpendiculaire au flanc (14, 15) muni des trappes (16) de passage des pinces d'embrochage, l'aile de fixation comprenant, à intervalles réguliers (h), des orifices de passage (20, 21) pour des tenons et des pièces de verrouillage solidaires des supports d'appareils.

5. Système selon la revendication 4, caractérisé par le fait que chaque support (M) comprend une paroi antérieure (11f) et une paroi postérieure (11g) de fixations verticales rattachées par un voile (11d) muni d'une ouverture (11e) de passage des pinces d'embrochement, la paroi antérieure de fixation étant dotée d'au moins un tenon (11h) et une pièce de verrouillage (11i), la paroi postérieure étant dotée d'au moins deux tenons (11h) d'axes perpendiculaires aux plans des barres.

6. Système selon l'une des revendications 1 à 5, caractérisé par le fait que le support (M) se compose d'une partie (11) fixe par rapport à l'enveloppe (E) de la colonne et d'une partie (12) réglable en profondeur par rapport à la partie fixe, la partie fixe du support comprenant le voile vertical (11d) et au moins une face horizontale (11b, 11c) dotée de moyens de réglage (11a) de la partie réglable, la partie réglable comportant une platine de fixation des appareils interrupteurs (I).

7. Système selon la revendication 6, caractérisé par le fait que la partie réglable (12) du support (M) est une platine munie de perforations régulières (12a) pour la fixation des appareils interrupteurs (I).

8. Système selon la revendication 7, caractérisé par le fait que la platine réglable (12) porte, au moyen de pattes télescopiques (74) plusieurs rails horizontaux (75) de support d'appareils interrupteurs modulaires.

9. Système selon l'une des revendications 1 à 8, caractérisé par le fait que chaque support (M) est pourvu de moyens de fixation du bloc de prise de courant et de sectionnement (30).

10. Système selon l'une des revendications 1 à 9, caractérisé par le fait que le bloc de prise de courant et de sectionnement (30) comprend une partie fixe munie des moyens de connexion aux appareils interrupteurs et portant les moyens de commande manuelle du sectionnement et comprend une partie mobile qui comporte un coulisseau (32) portant des pinces (31) embrochables sur les barres de distribution (B1-B5) et débrochables de celles-ci, le mouvement de translation du coulisseau étant produit pour assurer la connexion et respectivement le sectionnement par la rotation d'un arbre rotatif (33) commandé par les moyens de commande manuelle.

11. Système selon la revendication 10, caractérisé par le fait que le mouvement de translation du coulisseau (32) s'effectue en réponse à la rotation de l'arbre rotatif (33) par l'intermédiaire d'au moins une liaison à pignon (35) et crémaillère (36).

12. Système selon l'une des revendications 10 et 11, caractérisé par le fait que le bloc de prise de courant et de sectionnement (30) présente un plastron (50) de sectionnement muni d'un orifice frontal à fentes (55) et muni d'une noix rotative (40) qui comporte un logement (43) à fentes coaxial à l'orifice et qui est en rotation de l'arbre rotatif (33), les fentes de l'orifice du plastron et du logement de la noix étant susceptibles de recevoir une clé de manœuvre et coïncidant seulement dans une position d'embrochement et dans une position de sectionnement.

13. Système selon l'une des revendications 1 à 12, destiné au montage d'appareils interrupteurs (I) à bouton ou manette (B) de commande manuelle, caractérisé par le fait que le bloc de prise de courant et de sectionnement (30) comprend un palpeur (51) présentant une prise manuelle (52), une butée et une extrémité libre disposée en profondeur au niveau de la manette de commande de l'appareil, la butée du palpeur coopérant avec une portée de la partie mobile du bloc de sectionnement pour empêcher le sectionnement et le réembrochement lorsque le palpeur détecte que la manette de l'appareil est en position « marche ».

14. Système selon l'une des revendications 12 et 13, caractérisé par le fait que la butée du palpeur coopère avec une came (44) appartenant à la noix rotative (40) d'entraînement de l'arbre de commande du sectionnement (33).

15. Système selon l'une des revendications 12 à 14, caractérisé par le fait qu'il est prévu sur la partie mobile de sectionnement (32) des éléments indicateurs des états respectifs d'embrochement et de sectionnement, et sur le plastron de sectionnement (50) une fenêtre (56, 71) en regard de laquelle les éléments indicateurs sont susceptibles d'apparaître.

16. Système selon l'une des revendications 1 à 15, caractérisé par le fait que la partie fixe et la partie mobile du bloc de prise de courant et de sectionnement (30) présentent chacune au moins un orifice (57), lesquels orifices sont en regard l'un de l'autre en position de sectionnement pour permettre, dans cette position, l'introduction d'un cadenas.

17. Système selon l'une des revendications 13 à 16, caractérisé par le fait que le palpeur présente un orifice permettant l'introduction d'un cadenas pour verrouiller le palpeur dans sa position de détection de l'état « ouverture » de l'appareil interrupteur.

18. Système selon l'une des revendications 1 à 17, caractérisé par le fait qu'un dispositif de précoupure coopère avec une partie mobile du bloc de prise de courant et de sectionnement pour actionner au moins un contact de précoupure associé à l'appareil interrupteur (I).

19. Système selon la revendication 18, caractérisé par le fait que le dispositif de précoupure comporte un microcontact (42) sensible au déplacement du palpeur (51) à partir de sa position de repos.

20. Système selon la revendication 18, caractérisé par le fait que la noix rotative (40) du bloc de prise de courant et de sectionnement (30) est montée à translation sur l'arbre rotatif (33) en étant sollicitée par un ressort de rappel (41), la noix subissant un déplacement à l'encontre de l'effort du ressort lors de la commande manuelle du sectionnement, le dispositif de précoupure comprenant un microcontact (42) sensible au déplacement de la noix selon l'axe de l'arbre.

21. Système selon l'une des revendications 1 à 20, caractérisé par le fait que chaque support (M) avec le bloc de sectionnement associé est enfermé dans un coffret muni d'un plastron d'appareil (62) et d'une porte pivotante (68).

22. Système selon la revendication 21, caractérisé par le fait que le plastron de sectionnement (50) recouvre une zone de fixation du plastron d'appareil (62) au support, le plastron (50) étant escamotable pour dégager cette zone de fixation.

23. Système selon la revendication 22, caractérisé par le fait que le plastron de sectionnement (50) et la partie mobile (32) du bloc de sectionnement (30) présentent des moyens coopérants interdisant l'escamotage du plastron (50) dans la position d'embrochement du bloc.

24. Colonne de distribution pour appareils interrupteurs (I) disposés sur des supports (M) d'un système de distribution, comprenant des barres omnibus (B1-B5) verticales non coplanaires axées dans différents plans parallèles verticaux, une enveloppe de protection (E) disposée autour des barres et au moins un flanc (14, 15) perpendiculaire aux plans des barres (B1-B5) et muni de trappes de passage (16) pour des pinces d'embrochement (31) d'un organe de prise de courant et de sectionnement (30) associé à chaque support, caractérisée par au moins une aile de fixation (14a, 14b, 15a, 15b) perpendiculaire au flanc (14, 15) et dotée, à intervalles réguliers (h), d'orifices (20, 21) de passage pour des tenons et pièces de verrouillage solidaires des supports (M) des appareils interrupteurs (I).

**Claims**

1. A distribution system for electric switching apparatus (I), comprising a distribution column (C) which comprises vertical non coplanar busbars (B1-B5) centered in different parallel vertical planes, and a protective case (E) disposed about the bars, characterized by :

a plurality of supports (M) which extend in a direction parallel to the plane of said bars (B1-B5), each support comprising at least one bearing wall (11f, 11g) which may be applied against a respective fixing face (14a, 14b, 15a, 15b) of the protective casing (E) of the column (C) and being adapted for supporting :

on the one hand, at least one switching apparatus (I),

on the other hand, a current tapping and disconnecting member (30) having clips (31) clippable on the distribution bars (B) by introducing them through traps (16) provided in one side (14, 15) of the case perpendicular to the planes of the bars,

the current tapping and disconnecting member (30) comprising means for connection to the switching apparatus and a mobile disconnecting part (32) adapted to be actuated by manual control means.

2. The system according to claim 1, characterized in that the fixing faces (14a, 14b, 15a, 15b) provided on the protective case (E) for receiving the bearing walls (11f, 11g) of the supports (M) are perpendicular to the sides (14, 15) of the case in which the traps (16) are formed for passing the connecting clips (31).

3. The system according to claim 2, characterized in that said clipping traps (16) are provided on two opposite sides (14, 15) of the case (E) of the distribution column (C), bearing projections (72) being also provided for the supports (11) on said sides (14, 15).

4. The system according to claims 2 or 3, characterized in that the case (E) of said distribution column (C) has at least one fixing flange (14a, 14b, 15a, 15b) perpendicular to said side (14, 15) formed with traps (16) for passing the connecting clips therethrough, the fixing flange comprising, at regular intervals (h), passage apertures (20, 21) for tenons and locking pieces connected to the apparatus supports.

5. The system according to claim 4, characterized in that each support (M) comprises a vertical fixing front (11f) and rear (11g) wall joined by a web (11d) having an opening (11e) for passing the connection clips therethrough, the front fixing wall being provided with at least one tenon (11h) and one locking piece (11i), said rear wall being provided with at least two tenons (11h) having axes perpendicular to the planes of the bars.

6. The system according to one of the claims 1 to 5, characterized in that the support (M) comprises a portion (11) fixed with respect to the case (E) of the column and a portion (12) which is adjustable in depth with respect to the fixed portion of the support comprising the vertical web (11d) and at least one horizontal face (11b, 11c) having means (11a) for adjusting the adjustable portion, the adjustable portion comprising a fixing platen for the switching apparatus (I).

7. The system according to claim 6, characterized in that said adjustable portion (12) of said support (M) is a platen having evenly spaced perforations (12a) for fixing switching apparatus (I).

8. The system according to claim 7, characterized in that said adjustable platen (12) supports, by means of telescopic lugs (74), several horizontal rails (75) for supporting modular switching apparatus.

9. The system according to one of the claims 1 to 8, characterized in that each support (M) is provided with means for fixing the current tapping and disconnecting block (30).

10. The system according to one of the claims 1 to 9, characterized in that said current tapping and disconnecting block (30) comprises a fixed portion having means for connection to the switching apparatus and supporting manual disconnection control means and comprises a mobile portion including a slide (32) having clips (31) clippable on the distribution bars (B1-B5) and unclippable therefrom, the translational movement of the slide being caused so as to provide connection and respectively disconnection by the rotation of a rotary shaft (33) controlled by the manual control means.

11. The system according to claim 10, characterized in that the translational movement of said slide (32) takes place in response to the rotation of said rotary shaft (33) by at least one rack (36) and pinion (35) connection.

12. The system according to one of the claims 10 and 11, characterized in that said current tapping and disconnecting block (30) has a disconnection plate (50) with a front slotted aperture (55) and having a rotary cylinder (40) which comprises a slotted housing (43) coaxial with said aperture and which is interlocked for rotation with said rotary shaft (33), the slots of the aperture of the plate and of the housing of the cylinder being adapted to receive an operating key and only coinciding in a connection position and in a disconnection position.

13. The system according to one of the claims 1 to 12, for fitting switching apparatus (I) comprising a manual button or lever (B), characterized in that said current tapping and disconnecting block (30) comprises a sensor (51) having a manual grip (52), a stop and a free end disposed in depth at the level of the control lever of the apparatus, the stop of the sensor cooperating with a bearing surface of the mobile part of the disconnecting block for preventing the disconnection and re-connection when the sensor detects that the lever of the apparatus is in the « on » position.

14. The system according to one of the claims 12 and 13, characterized by the fact that the stop of the sensor cooperates with a cam (44) belonging to the rotary cylinder (40) driving the disconnection control shaft (33).

15. The system according to one of the claims 12 to 14, characterized in that there are provided on the mobile disconnection part (32) elements indicating the respective connection and disconnection states, and in the disconnection plate (50) a window (56, 71) opposite which the indicator elements are able to appear.

16. The system according to one of the claims 1 to 15, characterized in that said fixed portion and said mobile portion of the current tapping and disconnection block (30) each have at least one aperture (57), which apertures are opposite each other in the disconnection position so as to allow in this position the insertion of a padlock.

17. The system as claimed in one of the claims 13 to 16, characterized in that the sensor has an aperture for introducing a padlock for locking the sensor in its position detecting the « open » state of the switching apparatus.

18. The system according to one of the claims 1 to 17, characterized in that a prebreak device cooperates with a mobile portion of the current tapping and disconnecting block for actuating at least one prebreak contact associated with the switching apparatus (I).

19. The system as claimed in claim 18, characterized in that said prebreak device comprises a microcontact (42) responsive to the movement of the sensor (51) from its rest position.

20. The system as claimed in claim 18, characterized in that said rotary cylinder (40) of the current tapping and disconnection block (30) is mounted for translational movement on the rotary shaft (33) while being urged by a return spring (41), the cylinder being caused to move against the force of the spring during manual control of the disconnection, the prebreak device comprising a microcontact (42) responsive to the movement of the cylinder along the axis of the shaft.

21. The system according to one of the claims 1 to 20, characterized in that each support (M) with the associated disconnection block is enclosed in a box having an apparatus plate (62) and a pivoting door (68).

22. The system as claimed in claim 21, characterized in that the disconnection plate (50) covers a fixing zone of the apparatus plate (62) to the support, said disconnection plate (50) being retractable for disengaging this fixing zone.

23. The system according to claim 22, characterized in that said disconnection plate (50) and said mobile portion (32) of said disconnection block (30) have cooperating means preventing the disconnection plate (50) from being retracted in the clipped-on position of the block.

24. A distribution column for switching apparatus (I) disposed on supports (M) of a distribution system, comprising vertical non coplanar busbars (B1-B5) centered in different vertical parallel planes, a protective envelope (E) disposed about the bars and at least a side (14, 15) perpendicular to the planes of the bars (B1-B5) and having passage traps (16) for passing therethrough clips for connection of a current tapping and disconnecting member (30) associated with each support, characterized in that at least one fixing flange (14a, 14b, 15a, 15b) perpendicular to said side (14, 15) and having, at regular intervals (h), apertures (20, 21) for passing tenons and locking pieces connected to the supports (M) of the switching apparatus (I).

**Patentansprüche**

1. Verteilersystem für elektrische Schaltgeräte (I) mit einer Verteilerkolonne (C), die senkrechte, nicht koplanare und in verschiedenen senkrechten parallelen Ebenen zentrierte Sammelschienen (B₁-B₅) aufweist und ein sich um die Schienen erstreckendes Schutzgehäuse (E), gekennzeichnet durch :

eine Vielzahl von Stützvorrichtungen (M), die sich in einer zur Ebene der besagten Schienen (B₁-B₅) parallelen Richtung erstrecken, wobei jede Stützvorrichtung mindestens eine Stützwand (11f, 11g) aufweist, welche gegen eine jeweilige Befestigungsfläche (14a, 14b, 15a, 15b) des Schutzgehäuses (E) der Säule (C) angelegt werden kann und so ausgelegt ist, dass sie tragen kann :

einerseits mindestens ein Schaltgerät (I),

andererseits ein Stromabnehmer- und -unterbrecherelement (30) mit Klemmen (31), welche auf die Sammelschienen (B) gesteckt werden können, durch Einführen in Klappen (16), die in einer Seite (14, 15) des Gehäuses senkrecht zu den Schienenebenen vorgesehen sind,

das Stromabnehmer- und -unterbrecherele-ment (30) mit Anschlussmitteln an Schaltgeräte versehen ist und einem beweglichen Unterbrecherteil (32), das durch Steuermittel von Hand betätigt werden kann.

2. System nach Anspruch 1, gekennzeichnet durch die Tatsache, dass die Befestigungsflächen (14a, 14b, 15a, 15b), welche auf dem Gehäuse (E) für die Stützwände (11f, 11g) der Stützvorrichtungen (M) vorgesehen sind, sich senkrecht zu den Seitenflächen (14, 15) des Gehäuses erstrecken, in denen die Klappen (16) für den Durchgang der aufsteckbaren Klemmen (31) angeordnet sind.

3. System nach Anspruch 2, dadurch gekennzeichnet, dass die Aufsteckklappen (16) auf zwei entgegengesetzten Seiten (14, 15) des Gehäuses (E) der Verteilersäule (C) vorgesehen sind und gleichfalls Vorsprünge (72) zur Abstützung der Haltevorrichtungen (11) auf den Seitenflächen (14, 15) vorgesehen sind.

4. System nach Anspruch 2 oder 3, dadurch gekennzeichnet, dass das Gehäuse (E) der Verteilerkolonne (C) mindestens einen Befestigungsflügel (14a, 14b, 15a, 15b) senkrecht zu den Seitenfläche (14, 15) aufweist, die mit Durchgangsklappen (16) für die Aufsteckklemmen versehen ist und besagter Befestigungsflügel in regelmässigen Abständen (h) Durchgangsöffnungen (20, 21) für mit den Haltevorrichtungen für die Geräte fest verbundene Zapfen und Verriegelungsteile aufweist.

5. System nach Anspruch 4, dadurch gekennzeichnet, dass jede Stützvorrichtung (M) eine vordere (11f) und eine hintere (11g) senkrechte Befestigungswand aufweist, die durch ein, mit einer Durchgangsöffnung (11e) für die Aufsteckklemmen versehenes Teil (11d) verbunden sind, wobei die vordere Befestigungswand mindestens einen Zapfen (11h) und ein Verriegelungsteil (11i) aufweist und die hintere Wand mindestens zwei Zapfen (11h), deren Achsen senkrecht zu den Ebenen der Schienen verlaufen.

6. System nach einem der Ansprüche 1 bis 5, dadurch gekennzeichnet, dass die Stützvorrichtung (M) aus einem Teil (11) besteht, der im Verhältnis zum Säulengehäuse (E) stationär ist und einem Teil (12), dessen Tiefe im Verhältnis zum stationären Teil eingestellt werden kann, wobei der stationäre Teil der Stützvorrichtung das senkrechte Teil (11d) aufweist und mindestens eine waagerechte Seite (11b, 11c) mit Mitteln (11a) zur Einstellung der einstellbaren Teils und der einstellbare Teil eine Befestigungsplatte für die Schaltgeräte (I) aufweist.

7. System nach Anspruch 6, dadurch gekennzeichnet, dass der einstellbare Teil (12) der Stützvorrichtung (M) eine Platte ist, mit Löchern in regelmässigen Abständen (12a) zur Befestigung der Schaltgeräte (I).

8. System nach Anspruch 7, dadurch gekennzeichnet, dass die einstellbare Platte (12) mittels ausziehbarer Halteklauen (74) mehrere waagerechte Halteschienen (75) für Modulschaltgeräte trägt.

9. System nach einem der Ansprüche 1 bis 8, dadurch gekennzeichnet, dass jede Stützvorrichtung (M) mit Mitteln zur Befestigung des Stromabnehmer- und -unterbrecherblocks (30) versehen ist.

10. System nach einem der Ansprüche 1 bis 9, dadurch gekennzeichnet, dass der Stromabnehmer- und -unterbrecherblock (30) aus einem stationären Teil besteht, der mit Anschlussmitteln an die Schaltgeräte versehen ist und die Mittel, um eine manuelle Unterbrechung zu bewirken trägt, und aus einem beweglichen Teil, mit einem Schieber (32), welcher Klemmen (31) trägt, die auf die Sammelschienen (B₁-B₅) aufgesteckt und von ihnen abgezogen werden können, wobei der Schieber bewegt wird, um jeweils die Verbindung oder Unterbrechung durch Drehung einer von den manuellen Steuermitteln betätigten Schwenkachse (33) zu bewirken.

11. System nach Anspruch 10, dadurch gekennzeichnet, dass die Bewegung des Schiebers (32) infolge der Drehung der Schwenkachse (33) durch mindestens eine Zahnrad (35)/Zahnstangen (36) Verbindung erfolgt.

12. System nach einen der Ansprüche 10 und 11, dadurch gekennzeichnet, dass der Stromabnehmer- und -unterbrecherblock (30) eine Unterbrecherplatte (50) mit einer mit Schlitzen versehen vorderen Öffnung (55) aufweist, sowie einem Drehzylinder (40) mit einer zur Öffnung koaxialen, mit Schlitzen versehenen Behausung (43), der mit der Drehwelle (33) geschwenkt wird und dass in die Schlitze der Plattenöffnung und der Zylinderbehausung ein Betätigungsschlüssel eingeführt werden kann und diese Schlitze sich nur in der eingeschalteten und unterbrochenen Stellung decken.

13. System nach einem der Ansprüche 1 bis 12, zur Montage von Schaltgeräten (I), die mit einem Knopf oder Hebel (B) zur manuellen Steuerung versehen sind, dadurch gekennzeichnet, dass der Stromabnehmer- und -unterbrecherblock (30) einen Taster (51) aufweist, mit einem Handgriff (52), einem Anschlag und einem freien Ende, das in Höhe des Bedienungsgriffs für das Gerät angeordnet ist, wobei der Anschlag des Tasters mit einer Trägerfläche des beweglichen Teils des Unterbrecherblocks zusammenarbeitet, um die Unterbrechung und Wiedereinschaltung zu verhindern, wenn der Taster erfasst, dass der Griff des Gerätes in Betriebsstellung ist.

14. System nach einem der Ansprüche 12 und 13, dadurch gekennzeichnet, dass der Anschag des Tasters mit einem Nocken (44) des Drehzylinders (40) zusammenarbeitet, der die Welle (33) zur Bewirkung der Stromunterbrechung antreibt.

15. System nach einem der Ansprüche 12 bis 14, dadurch gekennzeichnet, dass auf dem beweglichen Teil der Unterbrechungsvorrichtung (32) Elemente zur Anzeige des jeweiligen eingeschalteten und unterbrochenen Zustandes vorgesehen sind und auf der Unterbrecherplatte (50) ein Fenster (56, 71), dem gegenüber die Anzeigeelemente erscheinen können.

16. System nach einem der Ansprüche 1 bis 15, dadurch gekennzeichnet, dass der stationäre und der bewegliche Teil des Stromabnehmer- und -unterbrecherblocks (30) jeweils mindestens eine Öffnung (57) aufweisen, die in der unterbrochenen Stellung einander gegenüberliegen, um in dieser Stellung die Enführung eines Schlosses zu ermöglichen.

17. System nach einem der Ansprüche 13 bis 16, dadurch gekennzeichnet, dass der Taster eine Öffnung aufweist, zur Einführung eines Schlosses, um den Taster in seiner Erfassungsstellung des « geöffneten » Zustandes des Schaltgerätes zu verriegeln.

18. System nach einem der Ansprüche 1 bis 17, dadurch gekennzeichnet, dass eine Vorunterbrechungsvorrichtung mit einem beweglichen Teil des Stromabnehmer- und -unterbrecherblocks zusammenarbeitet, um mindestens einen dem Schaltgerät (I) zugeordneten Vorunterbrechungskontakt zu betätigen.

19. System nach Anspruch 18, dadurch gekennzeichnet, dass die Vorunterbrechungsvorrichtung einen Mikrokontakt (42) aufweist, der auf eine Bewegung des Tasters (51) aus seiner Ruhestellung heraus anspricht.

20. System nach Anspruch 18, dadurch gekennzeichnet, dass der Drehzylinder (40) des Stromabnehmer- und -unterbrecherblocks (30) verschiebbar auf die Drehwelle (33) montiert ist und von einer Rückstellfeder (41) beaufschlagt wird, wobei der Zylinder bei manueller Stromunterbrechung gegen die Wirkung der Feder verschoben wird und die Vorunterbrechungsvorrichtung einen Mikrokontakt (42) aufweist, der auf die Bewegung des Zylinders die Wellenachse entlang anspricht.

21. System nach einem der Ansprüche 1 bis 20, dadurch gekennzeichnet, dass jede Stützvorrichtung (M) mit dem zugeordneten Unterbrecherblock in einem Kasten eingeschlossen ist, der eine Geräteplatte (62) und eine Schwenktür (68) aufweist.

22. System nach Anspruch 21, dadurch gekennzeichnet, dass die Unterbrecherplatte (50) einen Befestigungsbereich der Geräteplatte (62) an der Stützvorrichtung überdeckt und die Platte (50) einziehbar ist, um diesen Befestigungsbereich freizugeben.

23. System nach Anspruch 22, dadurch gekennzeichnet, dass die Unterbrecherplatte (50) und der bewegliche Teil (32) des Unterbrecherblocks (30) zusammenwirkende Mittel aufweisen, welche das Einziehen der Platte (50) in der eingeschalteten Stellung des Blocks verhindern.

24. Verteilersäule für Schaltgeräte (I), welche auf den Stützvorrichtungen (M) eines Verteilersystems angeordnet sind, mit senkrechten, nicht koplanaren Sammelschienen (B₁-B₅) die in verschiedenen, senkrechten, parallelen Ebenen angeordnet sind, einem um die Schienen angeordneten Schutzgehäuse (E) und mindestens einer Seite (14, 15), die senkrecht zu den Ebenen der Schienen (B₁-B₅) angeordnet und mit Durchgangsklappen (16) für die Aufsteckklemmen (31) eines Stromabnehmer- und unterbrecherorgans das jeder Stützvorrichtung zugeordnet ist, versehen ist, gekennzeichnet durch mindestens einen, senkrecht zum Seitenteil (14, 15) verlaufenden Befestigungsflügel (14a, 14b, 15a, 15b), der in regelmässigen Abständen (h) Durchgangslöcher (20, 21) für mit den Stützvorrichtungen (M) der Schaltgeräte (I) verbundene Zapfen und Verriegelungselemente aufweist.

EP 0 186 556 B1

FIG. 2

FIG. 1

# FIG. 3

FIG. 4

EP 0 186 556 B1

# FIG. 5

FIG. 6

EP 0 186 556 B1

FIG. 7

63

63a

C

11

70a 70b

70c

30

50

52

51

71

16

i

B

1

65

66

67

62a

62

68

68a

64a

64

FIG. 8

62a

54

68

52

B

68

B

70a    70b

70c

51

55    50

52

71

B

77

76

78

FIG. 10

E

30

B

FIG. 9

EP 0 186 556 B1